# EUROPEAN PATENT APPLICATION

(11) **EP 2 540 748 A1**
(43) Date of publication of application: **02.01.2013**
(21) Application number: 11005344.4
(22) Date of filing: 30.06.2011
(51) Int. Cl.: C08F 10/06, C09D 123/10, C08J 3/00

(54) **Super hydrophobic polypropylene particles**

(71) Applicant: Université de Mons, 7000 Mons (BE)
(72) Inventor: De Coninck, Joël, 7022 Mesvin (BE); Rioboo, Romain, 7022 Hyon (BE); Vaillant, Alexandre, 59290 Wasquehal (FR); Conti, Giuseppina, 7040 Aulnois (BE)
(74) Representative: Powis de Tenbossche, Roland

(57) **Abstract**

Super-hydrophobic particles of less than 1000 µm comprising at least an outer layer at least 90% by weight of Polypropylene, wherein said outer layer, has :
- a root mean square surface roughness comprised between 0.1 µm and 50µm, advantageously between 1.1µm and 20µm, preferably between 5µm and 16µm, and /or
- a Wenzel roughness factor above 1.2, advantageously above 1.3, such as comprised between 1.4 and 3, or more.

## Description

The invention relates to super-hydrophobic polypropylene particles having a weight average particle size of less than 1000 µm.

Super hydrophobic surface meant in the present specification outer surface for which a water drop (100µl) on the said outer surface (in a horizontal plane) defines at least a receding static water contact angle of more than 135°, advantageously of more than 140°, preferably above 145°, especially from 145° to 160°, and/or, but advantageously also, an advancing static water contact angle of more than 135°, advantageously of more than 140°, preferably above 145°, especially from 145° to 160°. Such an angle is advantageously measured by a Drop Shape Analyser Krüss. Advantageously super hydrophobic surface of the invention meant a surface having a water roll-off angle of less than 10°, preferably less than 6°.
As the invention relates to super hydrophobic particles, the contact angle and the roll-off angle is measured on a surface provided on its face contacting the water drop an outer coating consisting only of said PP particles. For example, the surface can be a metal support, a face of which is provided with a double face adhesive film, one adhesive face being adapted for the adherence of the film on the support, while the other adhesive face is adapted for the adherence of PP particles so as to form a continuous PP particle outer layer.

Polypropylene particles, such as fibres or powders are already known.

Said PP powder or fibres are produced by grinding extruded PP granules. The so obtained PP fine particles were not super hydrophobic.

US3,586,654 discloses a method of preparation of polymer powders by controlling the melting, the heating and the mixing of a liquid dispersion in presence of a surfactant. The polymer particles have a diameter of less than 1000µm, such as from 5 to 30µm, Although said document does not mention PP as polymer, tests have shown that when applying this method to PP, the PP particles are not super hydrophobic.

US4,833,060 relates to a method for preparing polymer particles, by dissolving a polymer into a solvent which is water miscible, by dispersing the solvent/polymer solution in water containing silicon particles with a size of less than 1µm. The coated silicon particles have a size of 2 to 5µm, for example from 50 to 100µm.
Due to the use of a solvent miscible in water and due to the dispersion of the solution into water, the coated silicon particles are not super hydrophobic.

US3,607,793 discloses a process for producing a porous structure from olefin polymer, such as PP, by heating a dispersion of the polymer into a hydrocarbon liquid at a temperature higher than the temperature for which the polymer is solubilized (i.e. forming a gel), and by cooling the gel.

US2009/227164 discloses a superhydrophobic coating for non woven materials, said coating being achieved by solubilizing PP into a solvent with precipitating agents, by spraying the solution onto the non woven for precipitating on said non woven agglomerated structures.

CN 1781866 relates to a polymer modified cement, which is a mixture comprising cement 35-45 wt%, quartzite 27-40 wt%, stone powder 20-35 wt%, fine ore slag powder 2-6 wt%, flexible dispersible glue powder 1-3 wt%, hydrophobic dispersible glue powder 1-2 wt%, polypropylene fiber 0.3-0.5 wt% and hydromellose 0.1-0.5 wt%. It is used as the excellent plastering material for wall surface in building, and may be adhered firmly with cement mortar, concrete, aerated concrete, foamed polystyrene board, etc.

US4,391,920 discloses a process for producing porous polymer particles. Said process has the following steps:
the introduction into a bed of solid-substance particles at a temperature above the segregating temperature, of a homogenous mixture having a minimum of two components, one component therein being a meltable polymer and the other component a fluid inert to the polymer, both components forming a binary system which has in its liquid phase a range of complete miscibility and also a range with a miscibility gap,
subsequent cooling of said mixture to a temperature below the solidification temperature of the polymer in the mixture,
comminution of the cake-like mass as obtained and
separation of the polymer substance from the inert fluid and solid-substance particles.

When using PP in such a process, the PP particles were not super hydrophobic.

When submitting a superhydrophobic PP layer prepared from a solution of PP in xylene, with a sandpaper, the outer surface of the scraped PP layer lost its superhydrophobic properties.

The invention aims among others to produce a powder and/or fiber that has the ability to render superhydrophobic some surfaces, especially with a mineral binder. The invention comprises for example at least the following two main steps:
The first step consist in making soluble polypropylene, PP (isotactic, syndiotactic or atactic) in an appropriate solvent system, for example xylene or a xylene containing solvent system. Then the solution is deposited onto a substrate surface (glass or metal or ceramic, higher is the smoothness more easy it will be to be removed) and the system is let evaporate at ambient temperature and pressure. The solution used can be sufficient for obtaining after evaporation of the solvent a thickness as large as 20 mm. The resulting surface is a porous-like white and fragile material made of PP.
The second step consists in removing the PP material from the substrate to be placed in a grinding machine. The powdery material can be cooled down to increase it fragility and ability to break. Then the material is grinded until the resulting powder is made of grains having a size of 0.1 µm to 50µm.

Thereafter this powder or fiber can be added as such, or as a liquid suspension using a low surface tension liquid (such as acetone, ethanol, etc), said liquid suspension being incorporated in any surface of other materials.

When placed onto another surface, in a dense enough manner, the resulting surface is made superhydrophobic despite the fact that the original PP material has encountered grinding, scratch and stress, thus transforming and modifying the roughness elements of the original surface.

The polypropylene used can be a grafted polypropylene, as for example, with maleic anhydride or acrylic acid. The resulting copolymer has a better adhesion to many materials but retains the main feature of crystallization of polypropylene and hydrophobicity of the rest of the branches. Polypropylene meant in the attached claims atatic, syndiotatic and/or isotactic PP, grafted PP and mixtures thereof. While propylene homopolymers are preferred, polypropylene copolymer such as ethylene-propylene block copolymers or random copolymers are also possible, and within the meaning of polypropylene in the present specification. Within also the meaning of the polypropylene in the present specification for the description of the invention, are surface treated polypropylene, such as surface halogenated polypropylene, such as chlorinated and/or fluorinated, as well as surface oxidized.

### Brief description of the invention

The invention relates to super-hydrophobic particles having a weight average particle size of less than 1000 µm, said particles comprising at least an outer layer comprising substantially only compounds soluble or miscible in a PP solvent system, advantageously in a Xylene containing solvent system, preferably in Xylene, said outer layer comprising at least 90% by weight of Polypropylene, wherein said outer polypropylene containing layer, advantageously porous, has an outer face having :
- a root mean square surface roughness measured with a magnification factor of 5, i.e. at a scale of approximately 2.2 mm, as well as with a magnification factor of 50, i.e. at a scale of approximately 220 µm; comprised between 0.1µm and 50µm, advantageously between 1.1µm and 20µm preferably between 5µm and 16µm, and /or
- a Wenzel roughness factor (defined as the ratio between the real surface area and the apparent surface area) above 1.2, advantageously above 1.3, such as comprised between 1.4 and 3, or more.

Advantageously, the particles have an outer face having:
- a root mean square surface roughness measured with a magnification factor of 5, i.e. at a scale of approximately 2.2 mm, as well as with a magnification factor of 50, i.e. at a scale of approximately 220 µm; comprised between 0.1 µm and 50µm, advantageously between 1.1µm and 20µm, preferably between 5µm and 16µm, and
- a Wenzel roughness factor (defined as the ratio between the real surface area and the apparent surface area) above 1.2, advantageously above 1.3, such as comprised between 1.4 and 3, or more.

According to an advantageous detail, the particles have a particle size of less than 500 µm, with an outer polypropylene containing layer having a thickness of less than 100µm, advantageously less than 50µm.

The particles have preferably an outer polypropylene containing layer having an inner porosity. Said particle porosity is function of the apparent density for one particle, i.e. so as not to take into account the void existing between adjacent PP particles. The PP particle apparent density is for example less than 0.85 kg/liter, advantageously less than 0,8 kg/liter, preferably less than 0.75 kg/litre (for example 0.7, 0.65, 0.6, 0.55 or even less).

Particles of the invention can have one or more of the following preferred characteristics:
the particles comprise substantially only compounds soluble or miscible in xylene or other PP solvent system, and/or
at least 90% by weight, advantageously at least 95% by weight, preferably at least 97% by weight of said compounds soluble or miscible in xylene is Polypropylene, and/or
the PP is at least partially crystalline, for example having a crystallinity index or degree of crystallinity of more than 30%, advantageously of more than 50%, preferably greater than 75%, such as 80% or more (the crystallinity index or degree of crystallinity is the fractional mass amount of crystalline PP. Said degree of crystallinity is determined by solid NMR or X-ray diffraction.), and/or
the particles have a bulk density determined for PP particles (not compacted) filling a volume of 1 liter, said bulk density being of less than 0.7, advantageously of less than 0.5, preferably less than 0.3, most preferably less than 0.2, and/or
the particles have a compression rate of 2 or more, said compression rate being measured by dividing the density of the PP powder compressed with a force of 11000kg/cm² by the density of the uncompressed PP powder, (i.e. the volume of 1kg uncompressed PP particles divided by the volume of 1 kg compacted PP particles with a force of 11000kg/cm²), and/or
the particles have a weight average particle size comprised between 1µm and 200µm, advantageously between 3µm and 100µm, preferably between 5µm and 75µm, most preferably between 7µm and 40µm, and/or
the particles are substantially free of particles with a size of less than 3µm, advantageously of less than 5µm, and/or
the PP is a grafted PP or functionalised PP, said grafted PP or functionalized PP having a higher affinity for being bound to silicium containing solid material

Before compacting, the PP powder has for example a bulk density of less than 0.25g/cm³, advantageously of less than 0.22g/cm³, such as comprised between 0.10 and 0.20 g/cm³.

When submitting to extreme compaction (1000kg or more per cm², such as more than 10000kg/m²), the bulk density of the PP powder can be greater than 0.40g/cm³, advantageously greater than 0.45g/cm³, such as comprised between 0.50g/cm³ and 0.60g/cm³.

The PP particles are advantageously halogenated in surface, such as chlorinated and/or fluorinated, but preferably fluorinated. Possible treatment can be operated by using methods similar to that disclosed in US2006078729 for fluorination. In case of chlorination of the surface, fluor gas is replaced by chlorine gas in the method disclosed in US2006078729.
For surface treatment of the PP with a halogen, preferably with fluor, the PP is first submitted to an oxidation treatment. The oxidation treatment is selected as at least a kind of treatment method from among corona discharge treatment, plasma treatment, flame-plasma treatment, electron beam irradiation treatment and ultraviolet irradiation treatment. Preferably, corona discharge treatment or plasma treatment is selected.
The corona discharge treatment is performed under a general condition, for example, the distance between the tip of electrode and the treated foundation within the range of 0.2-5.0 mm. The processing amount is 5 W.minute or more per 1 m² polypropylene particles, preferably within the range of 5-200 W.minute/m², and more preferably within the range of 10 to 180 W.minute/m².
The plasma treatment process comprises spraying an electrically neutralized excited gas on the surface of plastic base material. The excited gas is formed by eliminating charged particles from a simple substance gas such as argon, helium, krypton, neon, xenon, hydrogen, nitrogen, oxygen, ozone, carbon monoxide, carbon dioxide and sulfur dioxide or a mixed gas thereof after being electrically excited by a plasma jet. The plasma jet is formed by applying voltage between counter electrodes under an approximately atmospheric pressure and then generating plasma discharge from the mixed gas comprising, for example, nitrogen and oxygen including an oxygen concentration within the range of 5-15% by volume. In this case, the distance between the electrodes that the plastic base material passes is suitably determined by the thickness thereof, the magnitude of the applying voltage, the flow rate of the mixed gas, and the like. For example, the distance is usually within the range of 1-50 mm, preferably within the range of 2-30 mm. It is preferable that the voltage between the electrodes is applied so that field strength is within the range of 1-40 kV/cm. Here, the frequency of AC power is within the range of 1-100 kHz.
The flame plasma treatment process comprises spraying ionization plasma on the surface of the plastic base material. Here, the ionization plasma is generated in flames when natural gas or propane burns.
The electron beam irradiation treatment comprises irradiating electron beams on the surface of the plastic base material. Here, the irradiating electron beams are generated by an electron beam accelerator. As an electron beam radiator, for example, is used a device named "ELECTRO CURTAIN" that irradiates uniform electron beams from liner filaments in the shape of a curtain.
The ultraviolet irradiation treatment process comprises irradiating ultraviolet having a wavelength within the range of 200-400 µm on the surface of the plastic base material.
In the fluorination treatment, for example, fluorine gas is contacted with the polypropylene particles surfaces in the presence of oxygen to form a surface-oxidizing zone thereon. According to this, the index of wetting of the surface thereof is improved in the above-mentioned range. For example, it is performed within the range of a fluorine gas concentration within the range of 5-40% by volume in the presence of an oxygen concentration within the range of 60-95% by volume. It is preferable that the pressure is comparatively low to easily perform the reaction operation and the regulation. Specially, it is preferable that the pressure is 50 Pa or less. A type of the fluorination treatment can be selected from either a batch type or a continuous type. Treatment temperature is usually within the range of 10-100°C., preferably within the range of 10-40°C. The treatment time differs with the concentration of the fluorine gas, the pressure thereof, the treatment temperature, and the like, being usually within the range of 10 seconds to 2 hours, preferably 30-60 seconds.

In the case of the fluorination treatment by a batch process, the polypropylene resin particles are put into a reaction container in advance, thereafter being vacuously deaerated. In addition, oxygen gas within the range of 60-95% by volume is fed therein, and then, fluorine gas within the range of 5-40% by volume is fed therein. It is desirable that the fluorination treatment is performed at the treatment temperature of 10-100°C. After the fluorination treatment, unreacting gas is eliminated from the container, and the inside thereof is efficiently substituted and ventilated by inactive gas to produce fluorination-treated polypropylene particles.

The invention relates also to a composition adapted for forming after mixing with water and after hardening a solid structure having at least one hydrophobic and/or superhydophobic outer face, wherein said composition comprises :
- a reactive material adapted to form after reaction with water and after hardening a solid binder;
- optionally, but advantageously at least one inert solid filler, and
- a sufficient amount comprised between 0.1% by weight and 10% by weight of particles according to the invention, such as from 0.5% to 5% by weight of said particles, for achieving the degree of hydrophobicity required or the degree of super hydrophobicity required.

Advantageously the composition comprises at least an inert solid filler, advantageously a mineral solid filler.

The composition comprises preferably at least a retarder or retarding agent for retarding the start of the hardening of the binder. The presence of the particles of the invention improved the retarding effect of the retarding agent, while ensuring also a good flowing of the composition mixed with water.

The binder is preferably a hydraulic binder, a non-hydraulic binder, or a mixture thereof.

The invention still relates to a solid product having at least one layer prepared from a composition according to the invention, said layer after hardening of the binder of the said composition having a solid hydrophobic outer face, said face having moreover antigrafiti properties.

The invention still relates to a method of preparation of particles according to the invention, said method comprising at least the following steps :
- a preparation step for preparing a solution of polypropylene in a solvent system having a boiling point comprised between 50°C and 200°C at atmospheric pressure, said solution containing less than 10% by weight, advantageously less than 5% by weight of compound(s) soluble in the said solution different from polypropylene, the said solution being prepared at a temperature below the boiling point of the solvent system,
- a deposit step for forming a polypropylene layer onto a solid support insoluble into the solvent system, in which the said polypropylene layer is achieved by evaporating the solvent at a temperature below the melting point of the polypropylene, advantageously at least 5°C below the melting point of the polypropylene, said deposit step being carried out so that the thickness of the layer is at least 2mm, advantageously at least 5mm, preferably at least 10mm,
- a solvent removal step (for example by evaporation, but advantageously substantially only by evaporation) for achieving a polypropylene layer with a solvent content of less than 5% by weight, advantageously of less than 3% by weight;
- optionally a drying step at a temperature below the melting point of the polypropylene, advantageously at least below the softening point of the polypropylene, preferably at least 20°C below the melting point of the polypropylene;
- optionally a polypropylene removing step for removing the polypropylene layer at least partly from the solid support,
- optionally a drying step at a temperature below the melting point of the polypropylene, advantageously at least below the softening point of the polypropylene, preferably at least 20°C below the melting point of the polypropylene;
   and
- a soft grinding or milling treatment of the polypropylene layer with or without the support layer or portion thereof, the soft grinding or milling treatment being carried out by means of grinding or milling elements so that during the contact step of the grinding or milling elements with the polypropylene layer, with the support or portion(s) thereof, the temperature of the polypropylene layer and portions thereof is kept at least 10°C below the melting point of the polypropylene, said soft grinding or milling treatment being operated in one or more steps, possibly with intermediate cooling steps, up to reaching a weight average particle size of less than 1000µm.

The soft grinding or milling treatment is advantageously carried out in presence of a liquid in which the polypropylene is not soluble, advantageously in a liquid aqueous medium.

The method polypropylene layer comprises advantageously more than 97% by weight polypropylene, preferably more than 99% by weight.

The solution preparation step is for example part of the polymerisation step of propylene into polypropylene.

Details and characteristics of the invention will appear of the following description, in which reference is made to the attached drawing which represents a flow sheet of possible methods for preparing particles according to the invention. The examples are given as non limiting examples.

### Description of possible methods

The starting material in the hereafter described method is high purity PP or grafted PP.

The PP can be a commercial PP which is readily solubilized in Xylene.

The PP can also be PP from waste materials. In such a case, the PP is washed for removing undesired residue, such as food residue.

Examples of possible PP are :
* Polypropylene as produced by the method disclosed in WO 2009077464, having for title : PROCESS FOR THE PRODUCTION OF A BIMODAL POLYPROPYLENE HAVING LOW ASH CONTENT
* Polypropylene as produced by the process disclosed in US 2004054100. Said process comprises homopolymerising propylene or copolymerising propylene with one or more comonomers selected from ethylene and C4 to C101-olefins in the presence of a metallocene catalyst system comprising (a) a metallocene catalyst of general formula R"(XRₘ)(Cp'R'ₙ)M₂, wherein X is a cyclopentadienyl moiety (Cp) or a heteroatom, Cp' is a substituted or unsubstituted fluorenyl ring; each R is independently hydrogen or hydrocarbyl having 1 to 20 carbon atoms in which 0 ≤ m ≤ 4; each R' is independently hydrocarbyl having 1 to 20 carbon atoms in which 0 ≤ n ≤ 8; R" is a bridge which comprises a C1-C20 alkylene radical, a dialkyl germanium or silicon or siloxane, or an alkyl phosphine or amine radical, which bridge is substituted or unsubstituted, M is a Group IVB transition metal, vanadium or a lanthanide metal and each Q is hydrocarbyl having 1 to 20 carbon atoms or halogen, and (b) a cocatalyst which activates the catalyst component, the homo- or co-polymerisation being performed in a slurry process in a hydrocarbon diluent for the polypropylene or being performed in a solution process in a hydrocarbon solvent for the polypropylene, the concentration of propylene monomer in the diluent or solvent being lower than 70% by weight, based on the weight of the diluent or solvent, to produce a polypropylene homopolymer or copolymer having long chain branches on the polypropylene molecules.

The polypropylene prepared by the said method can be used as a solution, for example when using Xylene as solvent, for the further treatment in a method of the invention.

### * The polypropylene can also be a grafted polypropylene, as for example, with maleic anhydride or acrylic acid.

For example, the grafted PP is prepared by the method disclosed in US 6140425, having as title : Process for making polypropylene graft copolymers containing anhydride groups. According to said document, the graft copolymer containing anhydride groups is made by (1) making a graft copolymer comprising a backbone of a propylene polymer material having graft polymerized thereto polymerized monomers selected from the group consisting of (a) at least one acrylic acid substituted with a 1-3 C alkyl group and (b) a mixture of at least one of these substituted acrylic acids and a vinyl compound capable of copolymerizing therewith, wherein the total amount of polymerized monomers is about 20 parts to about 240 parts per hundred parts of the propylene polymer material and the amount of the substituted acrylic acid is 60 mole % or more of the polymerized monomers, and (2) heating the graft copolymer to a temperature of about 170°C to about 300°C to dehydrate the acid groups in the graft copolymer to form anhydride groups.

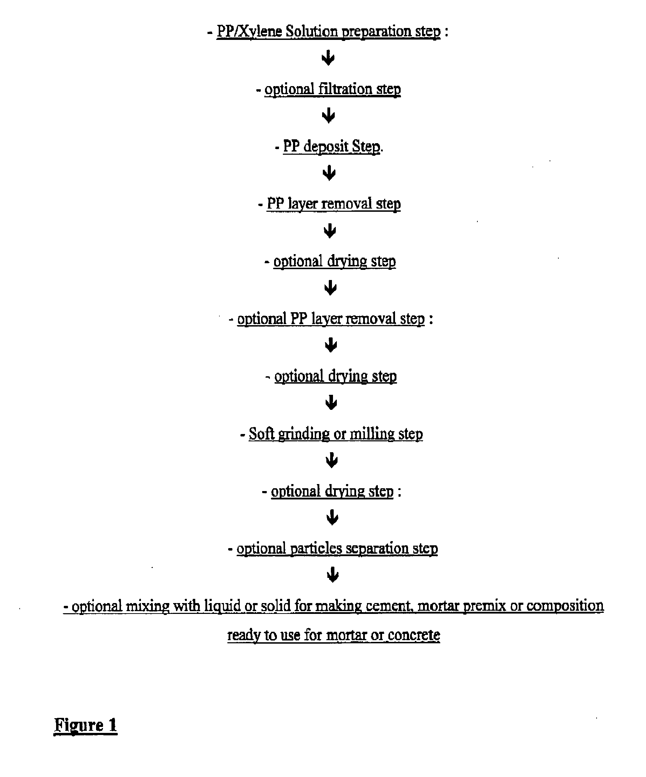

The flow sheet of methods according to the invention is schematically shown in Figure 1. According to said flow sheet, the method of preparation of particles according to the invention comprises at least the following steps :
- PP/Xylene Solution preparation step: a preparation step for preparing a solution of polypropylene in a solvent system having a boiling point comprised between 50°C and 200°C at atmospheric pressure, said solution containing less than 10% by weight, advantageously less than 5% by weight of compound(s) soluble in the said solution different from polypropylene, the said solution being prepared at a temperature below the boiling point of the solvent system. The solvent system comprises advantageously xylene, preferably at least 50% by weight of xylene with respect to the total weight of PP solvents. A preferred solvent system is a solvent system comprising substantially only xylene. The quantity of PP solubilized in the solvent system was less than 25g PP per 100ml solvent system, advantageously from 0.2g to 20g PP, preferably from 0.5g to 15g PP, per 100ml solvent. The solvent system is preferably suitable or appropriate for solubilizing PP at temperature below the melting point of the PP, advantageously at temperature below 100°C, preferably at temperature comprised between 10°C and 50°C, such as at room temperature. The solubilizing step can also be carried at temperature comprised between 60°C and 130°C, under pressure and/or under solvent reflux. When using the PP solution coming from the process of preparation of PP from propylene, the PP solution can be used with the presence of catalyst trace in the method of the invention, advantageously after adding some xylene for adapting the PP concentration of the PP solution. The PP solution can be (is advantageously) prepared from amorphous PP.

The average molecular weight in number (Mn) of the PP is advantageously comprised between 1000 and 1000000, preferably between 2000 and 200000, and most preferably between 2500 and 100000. The PP is most preferably selected so as to be soluble in a solvent system at temperature below 80°C.
- optional filtration step: such a filtration step is advantageous for removing some residue which are not soluble in xylene or in the solvent used. For example possible solid particles and catalyst can be removed by such a filtration step. Said filtration step is advantageously carried out at a temperature less to 60°C, such as at a temperature comprised between 10°C and 40°C.
- PP deposit Step: a deposit step for forming a polypropylene layer onto a solid support insoluble into the solvent system, in which the said polypropylene layer is achieved by evaporating the solvent at a temperature below the melting point of the polypropylene, advantageously at least 5°C below the melting point of the polypropylene, said deposit step being carried out so that the thickness of the layer is at least 2mm, advantageously at least 5mm, preferably at least 10mm, The thickness of the layer can be 20mm or even more. The deposit step is advantageously carried out in several successive steps, by adding new PP solution during a previous PP step.
The support can be a glass sheet or coated support, the coating being then not soluble in Xylene, but being advantageously easily tearable or removable from the support. Such a coating is for example a thin silicone layer deposited for example on a metal plate. According to an advantageous embodiment, the support or the coating on which the PP layer is deposited is water soluble (water soluble meant soluble in water or in an aqueous medium, such as containing a weak or a strong base, such as citric acid, chlorhydric acid, ... and mixture thereof) or water desintegrable (such a support formed by particles glued together by a water soluble glue, etc.), but insoluble in the used PP solvent system. For example the support or the said coating is a lime (Ca(OH)₂) based support which can be rendered water soluble in an acid aqueous medium.
The support is advantageously placed on the bottom of a container adapted for receiving the PP solution and having an opening adapted for the removal of the evaporated solvent. The deposit step is carried out at a temperature sufficient for evaporating the solvent, but at a temperature below the melting temperature of the PP. The temperature for said evaporation step is preferably less than 100°C, most preferably less than 50°C. The pressure is also advantageously controlled during said deposit step, so as to better control the evaporation rate of the solvent. The pressure is preferably less than 10⁵ Pa, most preferably less than 0.8 105Pa. The pressure is for example reduced during the deposit step. It has been observed that by reducing the pressure, a PP very porous layer with a extremely low remaining solvent content could be achieved. The PP layer has advantageously a PP content of more than 97% by weight, preferably more than 99% by weight.

The support (especially when provided with a water soluble layer or when being water soluble), prior to be treated or contacted with the PP - solvent solution is advantageously washed or cleaned, for example with the solvent system or a solvent (for PP) used in the solvent system. After said washing step, the support can be dried or can be still wetted with a solvent or the solvent system.

During the evaporation step of the solvent, the evaporated solvent is advantageously collected and directed to a condenser for collecting back the solvent or solvent system.
- PP layer removal step: said removal step is operated after a solvent removal step (deposit step), for achieving a polypropylene layer with a solvent content of less than 5% by weight, advantageously of less than 3% by weight. For example, the support or coated support is removed form the PP bath when the PP layer is thick enough. The PP coated support can be removed from the container, while being still wet or humidified with xylene.
- optional drying step: a drying step at a temperature below the melting point of the polypropylene, advantageously at least below the softening point of the polypropylene, preferably at least 20°C below the melting point of the polypropylene. Such drying step can be mechanical, by placing the PP layer in a chamber at low pressure, or by submitting the PP layer at a nitrogen gas flow. At the end of said drying step, the PP layer has for example a solvent content of less than 0.5% by weight.
- optional PP layer removal step: The polypropylene layer is advantageously removed at least partly from the solid support, so that the particles will substantially pure PP particles.

In case said PP is not removed from the solid support, after the milling or grinding step, the particles will have a support partly coated with PP.
- optional drying step: a drying step at a temperature below the melting point of the polypropylene, advantageously at least below the softening point of the polypropylene, preferably at least 20°C below the melting point of the polypropylene. Such drying step can be mechanical, by placing the PP layer in a chamber at low pressure, or by submitting the PP layer at a nitrogen gas flow. At the end of said drying step, the PP layer has for example a solvent content of less than 0.5% by weight. Such a drying step is not necessary in case the PP layer was prior to the removal step already dried.
- optional, but advantageous testing step: Prior to the milling or grinding step, it is advantageous to determine one or more parameters characterising the PP deposit, especially the degree of crystallinity, the super hydrophobicity character of one or more outer faces (advantageously more outer faces) of the PP deposit, for example by determining the receding static water contact angle, the advancing static water contact angle, tha water roll-off angle.
- Soft grinding or milling step: a soft grinding or milling treatment of the polypropylene layer with or without the support layer or portion thereof, the soft grinding or milling treatment being carried out by means of grinding or milling elements so that during the contact step of the grinding or milling elements with the polypropylene layer, with the support or portion(s) thereof, the temperature of the polypropylene layer and portions thereof is kept at least 10°C (preferably at least 20°C, most preferably at least 50°C) below the melting point of the polypropylene, said soft grinding or milling treatment being operated in one or more steps, possibly with intermediate cooling steps, up to reaching a weight average particle size of less than 1000µm, advantageously below 100µm, preferably below 50µm, such as comprised between 5µm and 75µm, most preferably between 7µm and 40µm.

The soft grinding or milling treatment is advantageously carried out in presence of a liquid in which the polypropylene is not soluble, advantageously in a liquid aqueous medium. The soft grinding step can also be operated at low temperature, such as at temperature below -40°C, i.e. so as to render the PP breakable.

The support can be selected so as to be more easily breakable than the PP, for example so that the support is broken in particles with a size lesser than the size of the PP particles.

When using a water soluble or water disintegrating support or support coating, the support or support layer can be removed during the wet grinding/milling step.
- optional drying step: a drying step at a temperature below the melting point of the polypropylene, advantageously at least below the softening point of the polypropylene, preferably at least 20°C below the melting point of the polypropylene. Such drying step can be mechanical, by placing the PP layer in a chamber at low pressure, or by submitting the PP layer at an air gas flow. At the end of said drying step, the PP layer has for example a water content of less than 0.5% by weight. Such a drying step is not necessary in case the PP layer was prior to the removal step already dried.
- optional particles separation step: said step can be used for separating support particles from PP particles. Such a step is not necessary in case the support particles can be used as filler in a composition of the invention.
When using water soluble or disintegrating support or support layer, material of the support/support layer can be removed by water washing step, with or without floating step, followed with one or more optional drying steps.
The separation step can also comprise a classification of the PP particles in function of their hydrophobic properties, in function of their size (for example for removing particles with a size of less than 3µm, advantageously of less than 5µm, for removing particles having a size greater than 100µm.
- optional surface treatment of the particles: The particles before or after the above separation step can be treated on their surface so as to give to the particles specific surface properties.
Such a treatment is for example a fluorination step, operated after a corona discharge treatment and/or a UV irradiation treatment. The corona treatment is performed under a general condition, for example, the distance between the tip of electrode and the treated foundation within the range of 0.2-5.0 mm. The processing amount is 5 W.minute or more per 1 m² polypropylene particles, preferably within the range of 5-200 W.minute/m², and more preferably within the range of 10 to 180 W.minute/m².
The ultraviolet irradiation treatment process comprises irradiating ultraviolet having a wavelength within the range of 200-400 µm on the surface of the plastic base material. Such surface oxidation or activation treatment is controlled so that the local temperature at the surface of the particles is maintained below the melting point of the PP, for example more than 20°C below the melting point of the PP.
In the fluorination treatment, for example, fluorine gas is contacted with the polypropylene particles surfaces in the presence of oxygen to form a surface-oxidizing zone thereon. For example, it is performed within the range of a fluorine gas concentration within the range of 5-40% (preferably about 20%) by volume in the presence of an oxygen concentration within the range of 60-95% (preferably about 80%) by volume. It is preferable that the pressure is comparatively low to easily perform the reaction operation and the regulation. Specially, it is preferable that the pressure is 50 Pa or less. A type of the fluorination treatment can be selected from either a batch type or a continuous type. Treatment temperature is usually within the range of 10°C-100°C., preferably within the range of 10-40°C. The treatment time differs with the concentration of the fluorine gas, the pressure thereof, the treatment temperature, and the like, being usually within the range of 10 seconds to 2 hours, preferably 30-60 seconds. During the fluorination step, the particles are advantageously kept in movement, for example by using a fluidised bed the gas for keeping in suspension the particles being the fluorine containing gas.
During the fluorine treatment, fluorine is advantageously added so as to keep quite constant the fluorine concentration into the batch reactor or with the fluidised bed reactor or for increasing the fluorine concentration.
After the fluorination treatment, unreacting gas is eliminated from the container, and the inside thereof is efficiently substituted and ventilated by inactive gas to produce fluorination-treated polypropylene particles.

The invention relates also to a composition adapted for forming after mixing with water and after hardening a solid structure having at least one hydrophobic outer face, wherein said composition comprises:
- optional mixing with dry component or liquid, such alcoholic compound, for making composition for mortar, cement or concrete, of for making premix for cement or mortar, etc.

In a specific example, by using Xylene as unique solvent in the method disclosed here above, and by using various PP with a weight average molecular weight comprised between 5000 and 30000, various PP/xylene solution were prepared with a PP weight content of 5%.

The different PP solutions were filtered and poured in different containers, the bottom of which was provided with a glass plate acting as support.

The Xylene was evaporated at a temperature comprised between 25°C and 50°C. After the complete evaporation of the solvent, the glass plate was provided with a thick porous and white PP layer, said layer having a thickness of about 1cm.

For each container, the glass plate with the PP layer was taken away from the container and submitted to an air drying at 70°C for 1 minute for ensuring that the xylene content in the PP layer was well below 0.5% by weight. The top surface of the PP layers was analysed, and it appears that the said PP layer top face had:
- a root mean square surface roughness measured with a magnification factor of 5, i.e. at a scale of approximately 2.2 mm, as well as with a magnification factor of 50, i.e. at a scale of approximately 220 µm; comprised between 1.1µm and 20µm, preferably between 5µm and 16µm, and/or
- a Wenzel roughness factor (defined as the ratio between the real surface area and the apparent surface area) above 1.2, advantageously above 1.3, such as comprised between 1.4 and 3, or more.

The PP layer was removed from the glass plate, while not destroying the porous structure of the PP layer.

For the grinding, various possibilities exist, such as cooling the PP in liquid nitrogen and the hammered the breakable PP layer, soft grinding in presence of a liquid.

After the grinding operation, the PP particles had a size of less than 50µm. Particles with a size of less than 5µm were removed. The weight average particle size was about 30µm.

The PP particles had a bulk density of less than 0.2 (the weight of 1 litre of PP not compacted particles was 200grams), and were characterized by a compression rate of about 2.5, the bulk density of the PP particles after compaction under 11000kg/cm² being about 0.54.

All PP particles were characterized by
- a root mean square surface roughness measured with a magnification factor of 5, i.e. at a scale of approximately 2.2 mm, as well as with a magnification factor of 50, i.e. at a scale of approximately 220 µm; comprised between 0.1µm and 50µm, advantageously between 1.1µm and 20µm, preferably between 3µm and 16µm, and /or - a Wenzel roughness factor (defined as the ratio between the real surface area and the apparent surface area) above 1.2, advantageously above 1.3, such as comprised between 1.4 and 3, or more.

The particles can be dry mixed with fibrous materials, so as to render said material hydrophobic or more hydrophobic.

The method was also suitable with other PP, such as grafted PP (such as with maleic anhydride for increasing the binding with various materials).

The method disclosed hereabove was repeated except that the support was a dry hydrated lime support, which was pretreated with xylene, before starting the deposit of PP. After depositing the PP layer on the lime support, the lime support with PP layer was placed in an aqueous bath (temperature below 60°C for example) containing some acid, such as citric acid, chlorhydric acid, etc. (acid or acids not attacking the PP but well suitable for attacking and/or solubilizing and/or disintegrating the lime support).
After washing and drying the PP layer, the PP layer is submitted to a soft grinding.

On an unexpected manner, it appeared that substantially all the PP particles issued from the soft grinding or milling were superhydrophobic (receding static angle of more than 140°, such as comprised between 145° and 160°, as well as advancing static water contact angle of more than 140°, such as comprised between 145° and 160°, despite the fact that the thickness of the layer was more than 1 cm.

The PP particles can also be post treated, for example for having a fluorinated surface.

For example, the particles are first submitted to a corona discharge treatment and/or a UV irradiation treatment. The corona treatment is performed under a general condition, for example, the distance between the tip of electrode and the treated foundation within the range of about 2 to 3 mm. The processing amount is 25 W.minute per 1 m² polypropylene particles.
The ultraviolet irradiation treatment process comprises irradiating ultraviolet having a wavelength within the range of 200-400 µm on the surface of the plastic base material. Such surface oxidation or activation treatment is controlled so that the local temperature at the surface of the particles is maintained below the melting point of the PP, for example more than 20°C below the melting point of the PP.
For the fluorination treatment, fluorine gas is contacted with the polypropylene particles surfaces pretreated by corona discharge or by UV irradiation, in the presence of oxygen to form a surface-oxidizing zone thereon. For example, it is performed within the range of a fluorine gas concentration of about 20% by volume in the presence of an oxygen concentration of about 80% by volume. It is preferable that the pressure (20Pa) is comparatively low to easily perform the reaction operation and the regulation. Treatment temperature is between 20 to 40°C. The treatment time was about 15 minutes.
During the fluorination step, the particles were maintained in movement.

The PP particles of the invention were also found to have protective properties against insects, dirts and parasites, such as crawling ectoparasites, lice, mites, burrowing parasites, bots, grubs, microscopic and larger endoparasites.

The PP particles of the invention can be used as such or as a mix with other particles, such as hydrophobic particles, such as hydrophobic coated silicon dioxide particles.

The particles of the invention were suitable to be added to various compositions for achieving at least a superhydrophobic outer or top face.

### Description of examples of compositions of the invention

### Gipsum Compositions of the invention

A fibrous talc-free plaster molding composition was prepared by mixing gypsum plaster, fibrous wollastonite, fine expanded perlite, solid filler (sand, fly ash and pyrophyllite), and PP particles of the invention (for example particles of the examples, such as unfluorinated PP particles, fluorinated PP particles and mixtures thereof).

The composition comprises by weight approximately 50-70% gypsum plaster, 5-20% fibrous wollastonite, 5-25% fine expanded perlite, 0-40% of a filler selected from the group consisting of sand, fly ash, pyrophyllite and mixtures thereof, and 1-5% of PP particles of the invention. It was observed that the composition on the cardboard support had a better flowing property than the same composition without PP particles of the invention.

After mixing the composition with water, the composition was deposited on a cardboard support, so that after drying the thickness of the plaster layer was about 0.7cm. After hardening, the top outer face was examined. Said top outer face had :
- a root mean square surface roughness measured with a magnification factor of 5, i.e. at a scale of approximately 2.2 mm, as well as with a magnification factor of 50, i.e. at a scale of approximately 220 µm; comprised between 0.1 µm and 50µm, advantageously between 1.1µm and 20µm, preferably between 5µm and 16µm, and /or
- a Wenzel roughness factor (defined as the ratio between the real surface area and the apparent surface area) above 1.2, advantageously above 1.3, such as comprised between 1.4 and 3, or more.

### Concrete Compositions of the invention

Concrete has been prepared as follow:

about 5 kg of perlite is dry mixed with PP particles (1kg) (for example particles of the examples, such as unfluorinated PP particles, fluorinated PP particles and mixtures thereof) so as to form coated perlite. Said dry mix can form a ready to use filler for various uses.

Thereafter 75kg of pumice, about 120 kg of cement were dry mixed. A further 4kg PP particles of the invention were added and mixed. The coated perlite was then dry mixed to the cement mix. The so achieved dry mix can form a ready to use concrete mix, after adding water.

A sufficient amount of water is then added, while mixing the composition so as to achieve a slurry.

The concrete was poured in a mould. It was observed that the pouring was easier when using PP particles of the invention, than the similar concrete composition without said PP particles. The top surface after hardening was superhydrophobic.

The above concrete composition was repeated except that Sodium gluconate was added so that the retarding agent was present in the dry composition (before adding the water) at the rate of 1% by weight. A dispersing agent (calcium salt of the condensate of naphthalene sulfonic acid and formaldehyde )was also present at the rate of 1%.
It was observed that the retarding effect was higher when the concrete composition comprised PP particles of the invention.
The top outer surface was hydrophobic and had anti graffiti properties.

The dry mix cement / PP particles of the invention was placed in a bag for comparing its stability with respect to that of common cement placed in a similar bag. The mix cement/

PP particles kept on a longer period its powdery aspect and its ability to form a uniform pastry after mixing with water.

The PP particles of the invention can also be used in other composition for ensuring better hydrophobic properties, such as in paints, isolation materials, paper walls, foaming material with open and/or closed pores, etc.

## Claims

1. Super-hydrophobic particles having a weight average particle size of less than 1000 µm, said particles comprising at least an outer layer comprising substantially only compounds soluble or miscible in xylene or in other Polypropylene solvent system, said outer layer comprising at least 90% by weight of Polypropylene, wherein said polypropylene of said outer layer, has :
- a root mean square surface roughness measured with a magnification factor of 5, i.e. at a scale of approximately 2.2 mm, as well as with a magnification factor of 50, i.e. at a scale of approximately 220 µm; comprised between 0.1µm and 50µm, advantageously between 1.1µm and 20µm, preferably between 5µm and 16µm, and /or
- a Wenzel roughness factor (defined as the ratio between the real surface area and the apparent surface area) above 1.2, advantageously above 1.3, such as comprised between 1,4 and 3, or more.

2. The particles of claim 1, which have an outer face having :
- a root mean square surface roughness measured with a magnification factor of 5, i.e. at a scale of approximately 2.2 mm, as well as with a magnification factor of 50, i.e. at a scale of approximately 220 µm; comprised between 0.1 µm and 50µm, advantageously between 1.1µm and 20µm, preferably between 5µm and 16µm, and
- a Wenzel roughness factor (defined as the ratio between the real surface area and the apparent surface area) above 1.2, advantageously above 1.3, such as comprised between 1.4 and 3, or more.

3. The particles of claim 1 or 2, which have a particle size of less than 500 µm, with an outer polypropylene containing layer having a thickness of less than 100µm,
advantageously less than 50µm.

4. The particles of any one of the preceding claims, which has an outer polypropylene containing layer having an inner porosity, said particles having as such an apparent density of less than 0.8, advantageously of less than 0.7, preferably of less than 0.6.

5. The particles of any one of the preceding claims, which comprise substantially only compounds soluble or miscible in xylene, at least 90% by weight, advantageously at least 95% by weight of said compounds soluble or miscible in xylene is Polypropylene.

6. The particles of the preceding claim, said particles not compacted having a bulk density of less than 0.7, advantageously of less than 0.5, preferably less than 0.3.

7. The particles of the preceding claim, said particles having a compression rate of more than about 2.

8. The particles of any one of the claims 1 to 7, which have a weight average particle size comprised between 1µm and 200µm, advantageously between 3µm and 100µm, preferably between 5µm and 75µm, most preferably between 7µm and 40µm the said particles being advantageously substantially free of particles with a size of less than 3µm, advantageously of less than 5µm.

9. The particles of any one of the preceding claims, in which the PP is a grafted PP or functionalised PP, said grafted PP or functionalized PP having a higher affinity for being bound to silicium containing solid material.

10. The particles of any one of the preceding claims, in which the PP particles have an outer surface at least partly fluorinated.

11. Composition adapted for forming after mixing with water and after hardening a solid structure having at least one hydrophobic, advantageously superhydrophobic outer face, wherein said composition comprises:
- a reactive material adapted to form after reaction with water and after hardening a solid binder;
- optionally, but advantageously at least one inert solid filler, preferably at least one inert mineral solid filler, and
- a sufficient amount comprised between 0.1 % by weight and 10% by weight of particles according to any one of the claims 1 to 10.

12. The composition of claim 11, which comprises at least a retarder for retarding the start of the hardening of the binder, said binder being advantageously a hydraulic binder, a non-hydraulic binder, or a mixture thereof.

13. Solid product having at least one layer prepared from a composition according to any one of the claims 11 and 12 , said layer after hardening of the binder of the said composition having a solid hydrophobic outer face, said face having moreover antigrafiti properties.

14. A method of preparation of particles according to any one of the claims 1 to 10, said method comprising at least the following steps:
- a preparation step for preparing a solution of polypropylene in a solvent system having a boiling point comprised between 50°C and 200°C at atmospheric pressure, said solution containing less than 10% by weight, advantageously less than 5% by weight of compound(s) soluble in the said solution different from polypropylene, the said solution being prepared at a temperature below the boiling point of the solvent system,
- a deposit step for forming a polypropylene layer onto a solid support insoluble into the solvent system, in which the said polypropylene layer is achieved by evaporating the solvent at a temperature below the melting point of the polypropylene, advantageously at least 5°C below the melting point of the polypropylene, said deposit step being carried out so that the thickness of the layer is at least 2mm, advantageously at least 5mm, preferably at least 10mm,
- a solvent removal step for achieving a polypropylene layer with a solvent content of less than 5% by weight, advantageously of less than 3% by weight;
- optionally a drying step at a temperature below the melting point of the polypropylene, advantageously at least below the softening point of the polypropylene, preferably at least 20°C below the melting point of the polypropylene;
- optionally a polypropylene removing step for removing the polypropylene layer at least partly from the solid support,
- optionally a drying step at a temperature below the melting point of the polypropylene, advantageously at least below the softening point of the polypropylene, preferably at least 20°C below the melting point of the polypropylene;
and
- a soft grinding or milling treatment of the polypropylene layer with or without the support layer or portion thereof, the soft grinding or milling treatment being carried out by means of grinding or milling elements so that during the contact step of the grinding or milling elements with the polypropylene layer, with the support or portion(s) thereof, the temperature of the polypropylene layer and portions thereof is kept at least 10°C below the melting point of the polypropylene, said soft grinding or milling treatment being operated in one or more steps, possibly with intermediate cooling steps, up to reaching a weight average particle size of less than 1000µm.

15. The method of the preceding claim, in which the soft grinding or milling treatment is carried out in presence of a liquid in which the polypropylene is not soluble, advantageously in a liquid aqueous medium.
